# EUROPÄISCHE PATENTSCHRIFT

(11) **EP 3 692 249 B1**
(45) Veröffentlichungstag und Bekanntmachung des Hinweises auf die Patenterteilung: **16.03.2022**
(21) Anmeldenummer: 18716187.2
(22) Anmeldetag: 29.03.2018
(51) Int. Cl.: F01N 3/20, B65D 81/34

(54) **FLÜSSIGKEITSBEHÄLTER FÜR EIN KRAFTFAHRZEUG**
FLUID CONTAINER FOR A MOTOR VEHICLE
RÉSERVOIR DE LIQUIDE POUR VÉHICULE AUTOMOBILE

(30) Priorität: 06.10.2017 DE 102017217819
(43) Veröffentlichungstag der Anmeldung: 12.08.2020
(73) Patentinhaber: Kautex Textron GmbH & Co. KG, 53229 Bonn (DE)
(72) Erfinder: SCHUMACHER, Nicolai, 53227 Bonn (DE); REGIER, David, 57589 Birkenbeul (DE); GÖDECKE, Claas, 53757 St. Augustin (DE)
(74) Vertreter: Richly & Ritschel Patentanwälte PartG mbB
(86) Internationale Anmeldenummer: PCT/EP2018/058239
(87) Internationale Veröffentlichungsnummer: WO 2019/068372

(56) Entgegenhaltungen:
- EP-A1- 3 168 075
- WO-A1-2016/137215
- DE-A1-102006 027 487
- DE-A1-102008 011 464
- DE-A1-102009 046 954
- DE-A1-102014 223 517
- FR-A1- 3 038 000

## Beschreibung

Die vorliegende Erfindung betrifft einen Flüssigkeitsbehälter für ein Kraftfahrzeug.

In modernen Kraftfahrzeugen werden wässrige Betriebsflüssigkeiten beispielsweise eingesetzt, um die Motorleistung zu steigern oder den Schadstoffausstoß zu verringern. So sind Systeme zur Wasserinjektion in den Brennraum oder SCR-Systeme zur Abgasnachbehandlung bekannt.

Die in einem Flüssigkeitsbehälter mitgeführten, wässrigen Betriebsflüssigkeiten können bei entsprechend niedrigen Außentemperaturen einfrieren. In einem solchen Fall ist ein schnelles Auftauen der wässrigen Betriebsflüssigkeit erforderlich, um ein Fördern zu ermöglichen und die entsprechenden Systeme mit der Flüssigkeit zu versorgen.

Hierzu ist es bekannt, Heizeinrichtungen in einem Vorratsvolumen des Flüssigkeitsbehälters anzuordnen. Dabei besteht die Herausforderung, die Heizeinrichtung vor mechanischer Beschädigung durch Eisdruck oder durch den Aufprall fahrdynamisch beschleunigter Eisstücke zu schützen. Weiter ergibt sich die Herausforderung, eine Energieversorgung der Heizeinrichtung medienbeständig abgedichtet aus dem Vorratsvolumen nach außen zu führen, um eine Energiequelle anzuschließen.

EP 3 168 075 A1, DE 10 2014 223517 A1, DE 10 2009 046954 A1, DE 10 2006027487 A1, FR 3 038 000 A1 und DE 10 2008 011464 A1 beschreiben bekannte Flüssigkeitsbehälter mit einem Heizelement und einem Gehäuse.

Vor diesem Hintergrund liegt der Erfindung die technische Problemstellung zugrunde, einen verbesserten Flüssigkeitsbehälter anzugeben, für den die voranstehend beschriebenen Herausforderungen zumindest teilweise gelöst sind, und der insbesondere einen Schutz vor mechanischer Beschädigung der Heizeinrichtung und eine medienbeständig abgedichtete Energieversorgung aufweist.

Die voranstehend beschriebene, technische Problemstellung wird gelöst durch einen Flüssigkeitsbehälter nach Anspruch 1. Weitere Ausgestaltungen der Erfindung ergeben sich aus den abhängigen Ansprüchen und der nachstehenden Beschreibung.

Die Erfindung betrifft einen Flüssigkeitsbehälter für ein Kraftfahrzeug,
- mit einer Behälterwandung, die ein Vorratsvolumen zum Bevorraten von Flüssigkeit gegenüber einer Umgebung begrenzt,
- mit einem Heizelement, das in dem Vorratsvolumen (10, 66) angeordnet ist und
- mit einem Gehäuse, wobei das Gehäuse das Heizelement gegenüber dem Vorratsvolumen flüssigkeitsdicht einfasst
- eine Kabeldurchführung, wobei wenigstens ein Kabel (zur Energieversorgung des Heizelements ausgehend von dem Heizelement in die Umgebung des Flüssigkeitsbehälters geführt ist,
- wobei die Kabeldurchführung eine erste Durchgangsöffnung hat, die an dem Gehäuse gebildet ist, und eine zweite Durchgangsöffnung hat, die an der Behälterwandung gebildet ist, und
- wobei das Gehäuse und die Behälterwandung im Bereich der Kabeldurchführung flüssigkeitsdicht verbunden sind,
- das Gehäuse und die Behälterwandung mittels eines Schweißrings miteinander verschweißt sind, dadurch gekennzeichnet, dass
- die Behälterwandung einen Wandungskragen hat,
- der die zweite Durchgangsöffnung begrenzt und
- der von dem Heizelement abgewandt in Richtung der Umgebung erstreckt ist,
- wobei der Wandungskragen mittels des Schweißrings mit dem Gehäuse verschweißt ist,
- das Gehäuse einen Gehäusekragen hat,
- der die erste Durchgangsöffnung begrenzt,
- der von dem Heizelement abgewandt in Richtung der Umgebung erstreckt ist und
- der zumindest abschnittsweise innerhalb der zweiten Durchgangsöffnung erstreckt ist, wobei der Gehäusekragen mittels des Schweißrings mit der Behälterwandung verschweißt ist.

Durch das Gehäuse ist das Heizelement vor mechanischer Beschädigung oder chemischer Beeinträchtigung durch Flüssigkeitskontakt geschützt.

In dem Flüssigkeitsbehälter kann gemäß einer Ausgestaltung der Erfindung genau ein einzelnes Heizelement vorgesehen sein. Dies hat den Vorteil, dass lediglich ein Heizelement in den Flüssigkeitsbehälter eingebunden und mit Energie versorgt werden muss.

Alternativ kann vorgesehen sein, dass zwei oder mehr Heizelemente in dem Vorratsvolumen angeordnet sind. Dies hat den Vorteil, dass die Heizelemente in ihren Dimensionen und ihrer räumlichen Anordnung im Vorratsvolumen möglichst kompakt in den Flüssigkeitsbehälter integriert werden können.

Das Gehäuse und die Behälterwandung grenzen demnach das Kabel gegenüber dem Vorratsvolumen ab, sodass kein Flüssigkeitskontakt zwischen im Betrieb des Flüssigkeitsbehälters im Vorratsvolumen aufgenommener Flüssigkeit und dem Kabel erfolgen kann. Weiter bildet die Verbindung zwischen dem Gehäuse und der Behälterwandung eine Abdichtung des Vorratsvolumens gegenüber der Umgebung, sodass im Bereich der Verbindung zwischen dem Gehäuse und der Behälterwandung keine Leckage von Flüssigkeit hin zur Umgebung erfolgt.

Gemäß einer weiteren Ausgestaltung des Flüssigkeitsbehälters ist vorgesehen, dass ein in Richtung des Heizelements erstrecktes Profil an die Behälterwandung angeformt ist, wobei das Profil die zweite Durchgangsöffnung begrenzt und wobei das Profil endseitig mit dem Gehäuse flüssigkeitsdicht verschweißt ist und/oder flüssigkeitsdicht verrastet ist.

So kann durch ein Verschweißen des Profils mit dem Gehäuse in kostengünstiger und einfacher Weise eine zuverlässige flüssigkeitsdichte Verbindung bereitgestellt werden. Alternativ kann vorgesehen sein, dass eine flüssigkeitsdichte, insbesondere mechanische Verrastung zwischen dem Profil und dem Gehäuse gebildet ist, die beispielsweise durch eine Silikon- oder Elastomerdichtung, wie einen O-Ring , abgedichtet ist. Hierdurch kann eine zerstörungsfrei lösbare Verbindung zwischen dem Profil und dem Gehäuse bereitgestellt werden, um beispielsweise Wartungs- oder Reparaturarbeiten durchzuführen.

Um das Heizelement vor Umgebungseinflüssen zu schützen, kann das Gehäuse im Bereich der ersten Durchgangsöffnung gegenüber der Umgebung abgedichtet sein. Hierzu kann das Kabel beispielsweise mit einem Kunststoffmaterial des Gehäuses umspritzt sein bzw. in dem Gehäuse vergossen sein oder mithilfe von nachträglich in den Bereich der Durchgangsöffnung eingebrachtem Dichtmaterial abgedichtet sein. Eine flüssigkeits- und/oder staub- und/oder gasdichte Abdichtung der ersten Durchgangsöffnung lässt sich insbesondere dadurch erreichen, dass das Heizelement samt Kabel in einem Spritzgussverfahren mit Kunststoff umspritzt wird, wobei der das Heizelement im Wesentlichen vollständig umschließende Kunststoff das Gehäuse bildet.

Nach einer weiteren Ausgestaltung des Flüssigkeitsbehälters ist vorgesehen, dass ein an einem Kabelende des Kabels vorgesehener Stecker durch die zweite Durchgangsöffnung durchführbar ist. Hierzu kann der betreffende Stecker beispielsweise einen geringeren maximalen Durchmesser aufweisen als der minimale Durchmesser der zweiten Gehäuseöffnung. So kann in einfacher Weise eine Montage des mit Stecker und Gehäuse vormontierten Heizelements an einer die zweite Durchgangsöffnung aufweisenden Halbschale des Flüssigkeitsbehälters derart erfolgen, dass der Stecker von einer dem Vorratsvolumen zugewandten Seite der Halbschale durch die zweite Durchgangsöffnung in eine dem Vorratsvolumen abgewandte Umgebung durchgeführt und das Heizelement samt Gehäuse in die Halbschale eingelegt und/oder mit der Halbschale stoffschlüssig und/oder mechanisch verbunden wird.

Der Schweißring kann aus einem Kunststoff bestehen oder einen Kunststoff aufweisen, der mit dem Material der Behälterwandung und dem Material des Gehäuses verschweißbar ist. Bei dem Schweißring kann es sich z.B. um einen Polyethylen-Ring handeln.

Der Schweißring kann zwei oder mehr Kunststoffkomponenten aufweisen.

Der Schweißring kann zwei Kunststoffkomponenten aufweisen, wobei eine erste Kunststoffkomponente mit der Behälterwandung verschweißt ist und die zweite Kunststoffkomponente mit dem Gehäuse verschweißt ist.

Zum stoffschlüssigen, flüssigkeitsdichten Verbinden des Gehäuses mit der Behälterwandung kann das Gehäuse zunächst an der Behälterwandung montiert bzw. auf eine dem Vorratsvolumen zugewandte Innenseite oder Stützelemente der Behälterwandung aufgelegt werden. Anschließend werden zu verschweißende Bereiche der Behälterwandung, des Gehäuses und des Schweißrings aufgeheizt. Zum Aufheizen kann ein Heizspiegel verwendet werden. Der Schweißring wird mit seinem aufgeheizten Bereich auf die aufgeheizten Bereiche der Behälterwandung und des Gehäuses gepresst, um eine stoffschlüssige Verbindung herzustellen. So kann ein zwischen der Gehäusewandung und der Behälterwandung gebildeter Spalt überbrückt und gegenüber der Umgebung flüssigkeitsdicht versiegelt werden. Insbesondere sind die aufgeheizten Bereiche während des Verschweißens in einem zumindest teilweise plastifizierten bzw. einem zumindest teilweise aufgeschmolzenen Zustand.

Der Bereich des Schweißrings, der zum Verschweißen mit dem Gehäuse und der Behälterwandung vorgesehen ist, kann eine ringförmige Planfläche sein. Der Schweißring kann alternativ oder ergänzend aufgestuft aufgeführt sein, um einen Versatz zwischen zu verschweißenden Bereichen bzw. Flächen des Gehäuses und der Behälterwandung zu überbrücken.

Der Schweißring kann eine Anordnung von Schweißstegen aufweisen, die vor dem Herstellen der Schweißverbindung teilweise oder vollständig aufgeschmolzen werden, um beim Verschweißen zu dem Gehäuse und der Behälterwandung entstehende Schweißspalte zu füllen.

Beispielsweise kann eine Stirnseite des Gehäusekragens auf Höhe einer der Umgebung zugewandten Außenseite der Behälterwandung angeordnet sein, so dass der Gehäusekragen die zweite Durchgangsöffnung vollständige durchsetzt. Die Außenseite der Behälterwandung und die Stirnseite des Gehäusekragens können in diesem Fall in einfacher Weise mittels eines Schweißrings verbunden werden, da die zu verschweißenden Flächen vor dem Verschweißen sichtbar und zugänglich sind.

Beispielsweise kann vorgesehen sein, dass der Wandungskragen einen voranstehend beschriebenen Gehäusekragen zumindest abschnittsweise oder vollständig umfangsseitig einfasst. Der Wandungskragen und der Gehäusekragen können jeweils eine der Umgebung zugewandte Stirnfläche haben, die jeweils mit dem Schweißring verschweißt sind. Insbesondere können die Stirnflächen auf gleicher Höhe, d.h. innerhalb einer Planebene, angeordnet sein, so dass in einfacher Weise ein gleichzeitiges Aufheizen und Verschweißen mit dem Schweißring ermöglicht wird.

Gemäß einer weiteren, alternativen Ausgestaltung des Flüssigkeitsbehälters ist vorgesehen, dass wenigstens ein Kabel zur Energieversorgung des Heizelements ausgehend von dem Heizelement zu einem Stecker geführt ist, wobei der Stecker einen Anschlussbereich hat, der außerhalb des Vorratsvolumens angeordnet und einer Umgebung des Flüssigkeitsbehälters zugewandt ist, und wobei der Stecker im Bereich einer Durchgangsöffnung der Behälterwandung flüssigkeitsdicht mit der Behälterwandung verbunden ist und die Durchgangsöffnung nach Art eines Stopfens verschließt.

Der Stecker bildet demnach gleichermaßen die Abdichtung der Wandung und eine Schnittstelle zur Energieversorgung des Heizelements. So kann in einfacher Weise eine medienbeständige Abdichtung des Flüssigkeitsbehälters erfolgen, wobei die Schnittstelle zur Energieversorgung in Form des Steckers kompakt in die Wandung des Flüssigkeitsbehälters integriert ist.

Um eine kostengünstige und zuverlässige flüssigkeitsdichte Verbindung herzustellen, kann der Stecker einen innerhalb des Vorratsvolumens angeordneten umlaufenden Kragen haben, der mit einem dem Vorratsvolumen zugewandten Kragen der Wandung stoffschlüssig und flüssigkeitsdicht verbunden ist. Hierzu kann der umlaufende Kragen des Steckers mit dem Kragen der Wandung verschweißt sein. Alternativ oder ergänzend kann der Kragen des Steckers mit dem Kragen der Wandung verklebt sein.

Alternativ oder ergänzend kann der Stecker zumindest abschnittsweise in der Durchgangsöffnung der Wandung sitzen. Hierbei kann beispielsweise der voranstehend erwähnte Kragen innerhalb des Vorratsvolumens angeordnet sein, während eine Öffnung oder ein auskragender Steckerkontakt der Umgebung zugewandt ist, um mit einem zugeordneten bzw. komplementär geformten Stecker verbunden zu werden. Der Stecker durchsetzt demnach die Wandung im Bereich der Durchgangsöffnung.

Gemäß einer weiteren Ausgestaltung des Flüssigkeitsbehälters ist vorgesehen, dass eine Mehrzahl von Stützelementen, wie Stege oder Streben, ausgehend von der Behälterwandung in Richtung des Heizelements erstreckt sind, wobei das Gehäuse derart auf den Stützelementen aufliegt und/oder mit den Stützelementen verbunden ist, dass das Heizelement einen Abstand zu der Behälterwandung aufweist.

Durch die lediglich lokale Auflage des Heizelements bzw. des Gehäuses auf den Stützelementen, kann das Gehäuse im Wesentlichen frei von in dem Vorratsvolumen zu bevorratender Flüssigkeit umspült werden, sodass das Heizelement bzw. das Gehäuse in jeder Raumrichtung Wärme an das zu erwärmende Medium abgeben kann. So kann ein zügiges und zuverlässiges Auftauen des zu bevorratenden Mediums, wie wässriger Betriebsflüssigkeit, bei niedrigen Temperaturen erreicht werden.

Es kann vorgesehen sein, dass das Gehäuse mit einem oder mehreren Stützelementen verschweißt, verklebt oder mechanisch verrastet ist, um das Gehäuse innerhalb des Vorratsvolumens zu fixieren. So kann die Anordnung des Heizelements in dem Vorratsvolumen festgelegt und vor fahrdynamischer Beschädigung geschützt werden.

Die Stützelemente können flächige Auflagebereiche aufweisen, in denen das Gehäuse zumindest abschnittsweise flächig bzw. plan aufliegt.

Bei dem Heizelement kann es sich um eine Plattenheizung handeln. Das bedeutet, dass eine Länge und Breite des Heizelements jeweils einem Vielfachen der Höhe bzw. Wanddicke des Heizelements entsprechen, so dass es sich bei dem Heizelement um ein flaches Bauteil handelt.

Alternativ oder ergänzend ist das Heizelement ein PTC-Heizelement. Das bedeutet, dass das Heizelement ein Temperaturverhalten nach Art eines PTC-Elements hat. Hierbei ist vorteilhaft, dass keine zusätzliche Steuerungstechnik zum Steuern des Wärmeeintrags erforderlich ist, da ein Überhitzen des Heizelements durch das Temperaturverhalten des Heizelements mit positivem Temperaturgradienten vermieden wird.

Alternativ oder ergänzend kann es sich bei dem Heizelement um ein mit Elektroden versehenes PTC-Heizpolymer handeln. Das Polymer weist dabei ein Temperaturverhalten nach Art eines PTC-Elements auf, so dass das PTC-Heizpolymer mithilfe der Elektroden erwärmt werden kann. Wiederum gilt, dass durch den positiven Temperaturgradienten keine zusätzliche Steuerungstechnik erforderlich ist, um ein Überhitzen des Heizelements zu vermeiden.

Bei dem Heizelement kann es sich insbesondere um eine starre Platte handeln, wobei starr derart auszulegen ist, dass das Heizelement samt Gehäuse nicht biegeschlaff ist bzw. nicht wesentlich zerstörungsfrei verformt werden kann.

Es kann vorgesehen sein, dass das Heizelement zumindest abschnittsweise einen Abstand zu der das Vorratsvolumen begrenzenden Behälterwandung aufweist. Hierzu kann das Gehäuse, wie voranstehend bereits beschrieben, auf Stützelementen aufliegen bzw. mit Stützelementen verbunden sein. So kann das Heizelement in Einbaulage im fertig montierten Zustand insbesondere horizontal ausgerichtet in einem Fahrzeug verbaut sein. Alternativ kann vorgesehen sein, dass das Gehäuse innerhalb des Vorratsvolumens geneigt angeordnet ist und beispielsweise mit einer ersten Kante an einer Unterschale des Flüssigkeitsbehälters anliegt oder eng benachbart zu einer Unterschale des Flüssigkeitsbehälters angeordnet ist und mit einer zweiten Kante an einer Oberschale des Flüssigkeitsbehälters anliegt oder eng benachbart zu einer Oberschale des Flüssigkeitsbehälters angeordnet ist. Damit kann füllstandsunabhängig ein zuverlässiges Auftauen von Eisschichten erreicht werden, wobei zudem ein Ausbilden von lokal um das Heizelement angeordneten, nicht belüfteten Hohlräumen innerhalb des Vorratsvolumens vermieden werden kann.

Alternativ oder ergänzend kann vorgesehen sein, dass das Heizelement wenigstens 20 % der Fläche des Behälterbodens der Behälterwandung überspannt. Insbesondere kann vorgesehen sein, dass das Heizelement wenigstens 30 % oder mehr der Fläche eines Behälterbodens der Behälterwandung überspannt. So kann ein zügiges flächiges Auftauen bzw. Erwärmen von in dem Vorratsvolumen bevorrateter Flüssigkeit, insbesondere wässriger Betriebsflüssigkeit, gewährleistet werden.

Alternativ oder ergänzend kann vorgesehen sein, dass das Heizelement und das Gehäuse Durchgangsöffnungen und/oder Ausnehmungen haben, in denen Formelemente oder Funktionseinheiten des Flüssigkeitsbehälters angeordnet sind. So kann insbesondere ein flächiges, einteiliges Heizelement angegeben werden, ohne die Möglichkeiten der Anordnung von Schwallwänden, Ventilen oder Hebelgebern innerhalb des Flüssigkeitsbehälters zu beeinträchtigen.

Es kann vorgesehen sein, dass das Heizelement, wie bereits erwähnt, in dem Gehäuse vergossen ist. Dadurch kann einerseits gewährleistet werden, dass das Gehäuse an dem Heizelement enganliegend, insbesondere spaltfrei, und damit kompakt in das Vorratsvolumen des Flüssigkeitsbehälters integriert werden kann. Andererseits wird in einfacher Weise ein zuverlässiger und kostengünstiger Schutz vor chemischer und/oder mechanischer Beeinträchtigung des Heizelements gewährleistet. Bei dem Gehäuse kann es sich beispielsweise um ein Gehäuse handeln, dass HDPE (high-density polyethylene) und/oder PP (Polypropylen) aufweist, oder aus HDPE und/oder aus PP besteht. Insbesondere kann das Gehäuse einen Kunststoff aufweisen, der artgleich mit dem mit einem Kunststoff der Behälterwandung des Flüssigkeitsbehälters verschweißbar ist. Der Flüssigkeitsbehälter kann einen ein- oder mehrschichtigen Wandungsaufbau mit einer oder mehreren Kunststoffschichten aufweisen.

Das Gehäuse kann einstückig gebildet sein, insbesondere für den Fall, dass das Heizelement in einem Kunststoff des Gehäuses vergossen ist.

Alternativ kann das Gehäuse wenigstens zweiteilig gebildet sein, und eine Unterschale haben, in die das Heizelement eingelegt und gegebenenfalls dichtend verschweißt wird, und einer Oberschale, die wiederum mit der Unterschale verschweißt wird, um das Heizelement flüssigkeitsdicht einzufassen. Alternativ kann eine solche Anordnung aus Ober- und Unterschale des Gehäuses lösbar durch Verschraubung und Dichtung verbunden und flüssigkeitsdicht bereitgestellt werden.

Eine Wanddicke des Gehäuses kann zwischen einschließlich 0,5 mm bis einschließlich 3 mm betragen. So können eine zuverlässige Abdichtung und ein zuverlässiger Schutz vor mechanischer Beanspruchung erfolgen.

Es kann vorgesehen sein, dass eine dem Vorratsvolumen abgewandte Hülse als Transportschutz und/oder Montagehilfe für Kabel, Stecker oder Kontakte , an dem Gehäuse befestigt ist. Alternativ oder ergänzend kann vorgesehen sein, dass eine dem Vorratsvolumen abgewandte Hülse, insbesondere dieselbe Hülse, als Teil des Gehäuses flüssigkeitsdicht mit der Behälterwandung verbunden ist, insbesondere, dass eine dem Heizelement abgewandter Endabschnitt der Hülse mit der Behälterwandung flüssigkeitsdicht verschweißt und/oder verklebt ist.

Soweit das Gehäuse mit der Behälterwandung mittels eines Schweißrings verschweißt werden soll und zudem die Hülse als Transportschutz an dem Gehäuse befestigt ist, kann ein Heizspiegel zum Aufheizen der mit dem Schweißring zu verschweißenden Bereiche des Gehäuses und der Behälterwandung bereitgestellt werden, der eine Durchgangsöffnung zum Durchführen der Hülse hat. So kann der Heizspiegel trotz montierter Hülse nahe der Behälterwandung und des Gehäuses positioniert werden, wobei der Heizspiegel beim Heranführen an die Behälterwandung und das Gehäuse mit seiner Durchgangsöffnung auf die Hülse aufgefädelt wird, so dass die Hülse den Heizspiegel durchdringt.

Nach einer weiteren Ausgestaltung des Flüssigkeitsbehälters ist vorgesehen, dass wenigstens eine Rippe an der Behälterwandung vorgesehen ist, die einen Anschlag zur Positionierung des Gehäuses innerhalb des Vorratsvolumens bildet. Eine solche Rippe kann als formschlüssige seitliche Begrenzung dienen, um ein laterales Verschieben des Gehäuses relativ zur Behälterwandung aufgrund fahrdynamischer Kräfte zu verhindern. Soweit zwischen dem Gehäuse und der Behälterwandung z.B. eine Schweißverbindung gebildet ist, kann die Schweißverbindung im Fahrbetrieb eines Kraftfahrzeugs entlastet werden, in dem die aus der Fahrdynamik resultierenden Kräfte durch die Rippe abgestützt und aufgenommen werden.

Im fertig montierten Zustand in Einbaulage des Flüssigkeitsbehälters in einem Kraftfahrzeug kann die Rippe daher als Anschlag für das Gehäuse innerhalb des Vorratsvolumens dienen, der eine horizontale Relativbewegung des Gehäuses gegenüber der Behälterwandung formschlüssig verhindert.

Eine weitere Ausgestaltung des Flüssigkeitsbehälters ist gekennzeichnet durch zwei oder mehr Rippen, die einander abgewandter Seiten des Gehäuses zugeordnet sind und das Gehäuse wenigstens zweiseitig einfassen, wobei die Rippen insbesondere an den einander abgewandten Seiten des Gehäuses anliegen. Das Gehäuse wird daher formschlüssig zwischen den Rippen aufgenommen.

Es kann vorgesehen sein, dass die Rippen Federstege bilden, die, sobald das Gehäuse montiert ist, federnd elastisch gegen das Gehäuse verspannt sind. So kann das Gehäuse form- und kraftschlüssig an der Behälterwandung festgelegt werden.

Es kann vorgesehen sein, dass mindestens eine Rippe zum Herstellen einer Clip- bzw. Schnappverbindung mit dem Gehäuse ausgebildet ist. So kann die Rippe endseitig an einem nach Art eines auskragenden Federstegs gebildeten Arms einen Vorsprung bzw. Widerhaken haben, der mit dem Gehäuse verrastet werden kann. Insbesondere kann das Gehäuse in eine der Außenkontur des Gehäuses angepasste Anordnung von Rippen eingesetzt und mit dieser verrastet werden. Folglich kann das Gehäuse form- und kraftschlüssig an der Behälterwandung festgelegt werden. Alternativ oder ergänzend kann der Flüssigkeitsbehälter wenigstens einen an der Behälterwandung vorgesehenen Niederhalter haben, der einen Anschlag zur Positionierung des Gehäuses innerhalb des Vorratsvolumens bildet. Während die Rippen in Einbaulage des Flüssigkeitsbehälters zum Verhindern einer horizontalen Relativbewegung zwischen der Behälterwandung und dem Gehäuse eingerichtet sind, kann der Niederhalter zum Verhindern einer vertikalen Relativbewegung des Gehäuses gegenüber der Behälterwandung dienen. Insbesondere kann das Gehäuse zwischen einem an einer Oberschale des Flüssigkeitsbehälters vorgesehenen Niederhalter und einem an der Unterschale des Flüssigkeitsbehälters vorgesehenen Stützelement fixiert sein, insbesondere verklemmt sein.

Es können zwei oder mehr zueinander beabstandete Niederhalter vorgesehen sein, um das Gehäuse zuverlässig relativ zu der Behälterwandung zu positionieren.

Wie voranstehend bereits diskutiert, kann das Heizelement eine Plattenheizung sein. Alternativ kann das Heizelement zwei oder mehr stabförmige Segmente haben, die unter einem Winkelversatz fächerartig angeordnet sind und/oder kettenartig aneinandergereiht sind.

So kann das Heizelement an die Anordnung der innerhalb des Vorratsvolumens angeordneten Funktionseinheiten, wie Pumpen oder Hebelgeber , oder Strukturelemente, wie Stand-Offs oder Schwallwände , angepasst werden.

Die stabförmigen Segmente können form- und/oder kraftschlüssig wirkende elektromechanische Verbindungsmittel aufweisen, wie eine Rastverbindung, eine Schnappverbindung oder eine Druccknopfverbindung , um die stabförmigen Segmente miteinander zu verbinden und elektrisch zu kontaktieren.

Nachfolgend wird die Erfindung anhand einer Ausführungsbeispiele darstellenden Zeichnung näher beschrieben. Es zeigen jeweils schematisch:
- Fig. 1: einen erfindungsgemäßen Flüssigkeitsbehälter;
- Fig. 2: ein Heizelement;
- Fig. 3: eine Gehäuseschale;
- Fig. 4: die Gehäuseschale aus Fig. 3 mit dem Heizelement aus Fig. 2;
- Fig. 5: die Gehäuseschale aus Fig. 3 mit dem Heizelement aus Fig. 2;
- Fig. 6: ein Gehäuse mit einer Hülse;
- Fig. 7: eine Halbschale eines weiteren erfindungsgemäßen Flüssigkeitsbehälters;
- Fig. 8: einen Querschnitt entlang VIII-VIII aus Fig. 7
- Fig. 9: einen weiteren erfindungsgemäßen Flüssigkeitsbehälter;
- Fig. 10: einen weiteren erfindungsgemäßen Flüssigkeitsbehälter;
- Fig. 11: einen weiteren erfindungsgemäßen Flüssigkeitsbehälter;
- Fig. 12: ein Segment eines Heizelements;
- Fig. 13: ein aus Segmenten zusammengesetztes Heizelement;
- Fig. 14: ein weiteres aus Segmenten zusammengesetztes Heizelement;

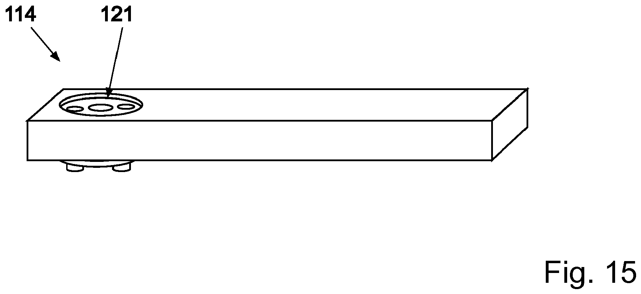

- Fig. 15: ein weiteres Segment eines Heizelements.

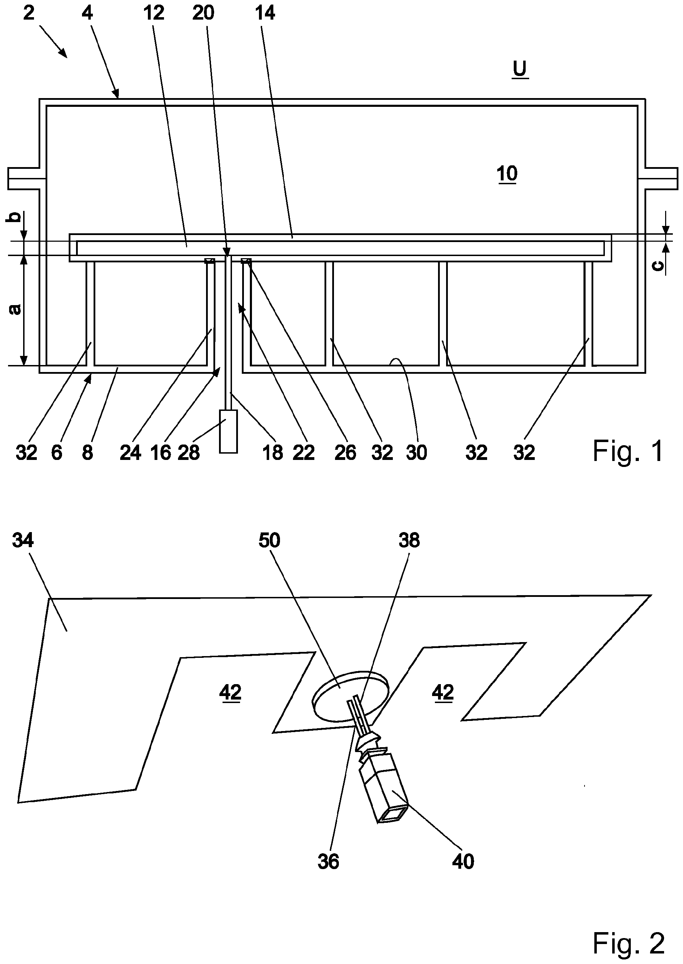

Fig. 1 zeigt einen Flüssigkeitsbehälter 2 für ein Kraftfahrzeug in einem Querschnitt. Der Flüssigkeitsbehälter 2 hat eine Oberschale 4 und eine Unterschale 6. Die Oberschale 4 und die Unterschale 6 sind miteinander verschweißt. Die Oberschale 4 und die Unterschale 6 bestehen vorliegend aus Kunststoff.

Die Oberschale 4 und die Unterschale 6 bilden eine Behälterwandung 8, die ein Vorratsvolumen 10 zum Bevorraten von Flüssigkeit gegenüber einer Umgebung U begrenzt.

Es versteht sich, dass der Flüssigkeitsbehälter 2 die üblichen, hier nicht dargestellten Zu- und Abgänge zur Flüssigkeitsentnahme, zum Befüllen und/oder zur Entlüftung des Behälters aufweist.

Der Flüssigkeitsbehälter 2 hat ein Heizelement 12, dass in dem Vorratsvolumen 10 angeordnet ist. Der Flüssigkeitsbehälter 2 hat ein ebenfalls in dem Vorratsvolumen 10 angeordnetes Gehäuse 14, wobei das Gehäuse 14 das Heizelement 12 gegenüber dem Vorratsvolumen 10 flüssigkeitsdicht einfasst.

Der Flüssigkeitsbehälter 2 hat eine Kabeldurchführung 16, wobei wenigstens ein Kabel 18 zur Energieversorgung des Heizelements 12 ausgehend von dem Heizelement 12 in die Umgebung U des Flüssigkeitsbehälters 2 geführt ist. Die Kabeldurchführung 16 hat eine erste Durchgangsöffnung 20, die an dem Gehäuse 14 gebildet ist. Die Kabeldurchführung 16 hat eine zweite Durchgangsöffnung 22, die an der Wandung 8 der Unterschale 6 gebildet ist. Das Gehäuse 14 und die Wandung 8 sind im Bereich der Kabeldurchführung 16 flüssigkeitsdicht verbunden, vorliegend miteinander verschweißt.

So ist ein in Richtung des Heizelements 12 erstrecktes Profil 24 an die Behälterwandung 8 angeformt, wobei das Profil 24 die zweitw Durchgangsöffnung 22 begrenzt und wobei das Profil endseitig mit dem Gehäuse 14 flüssigkeitsdicht verschweißt ist. Zwischen dem Gehäuse 14 und dem Profil 24 ist eine umlaufende Schweißverbindung 26 gebildet. Durch die Schweißverbindung 26 ist das Vorratsvolumen 10 gegenüber der Umgebung U im Bereich der Kabeldurchführung 16 flüssigkeitsdicht abgegrenzt.

Weiter ist das Gehäuse 14 im Bereich der ersten Durchgangsöffnung 20 gegenüber der Umgebung U abgedichtet, um das Heizelement 12 vor Umgebungseinflüssen zu schützen. Hierzu ist das Heizelement 12 zusammen mit dem Kabel 18 in dem Gehäuse 14 vergossen worden.

Ein an einem Kabelende des Kabels 18 vorgesehener Stecker 28 ist durch die zweite Durchgangsöffnung 22 durchführbar. So kann das Heizelement 12 mit dem Kabel in dem Gehäuse 14 vergossen werden und vor der Montage der Oberschale 4 in die Unterschale 6 eingelegt werden, wobei der Stecker 28 durch die zweite Durchgangsöffnung 22 geführt wird.

Das Heizelement 12 ist vorliegend als Plattenheizung 12 ausgeführt und besteht aus einem PTC-Heizpolymer. Das Heizelement 12 weist einen Abstand a zu der das Vorratsvolumen 10 begrenzenden Behälterwandung 8 auf. Der Abstand a ist größer als das Zweifache der Wanddicke b des als Plattenheizung ausgeführten Heizelements 12. Das Heizelement 12 überspannt mehr als 30 % der Fläche eines Behälterbodens 30 der Behälterwandung 8. Gemäß der Variante der Fig. 1 ist das Gehäuse 14 einstückig gebildet und umschließt das Heizelement 12 bis auf den Bereich der ersten Durchgangsöffnung 20 vollständig.

Der Flüssigkeitsbehälter 2 weist weiter eine Mehrzahl von Stützelementen 32 auf, die ausgehend von der Behälterwandung 8 in Richtung des Heizelements 12 erstreckt sind. Das Gehäuse 14 liegt auf den Stützelementen 32 auf und ist stoffschlüssig mit den Stützelementen 32 verbunden. Die Stützelemente 32 definieren den Abstand a.

Das Gehäuse 14 besteht vorliegend aus einem Kunststoff und ist artgleich mit der Behälterwandung 8 verschweißt. Die Wanddicke c des Gehäuses beträgt vorliegend 2 mm. (Wanddicke c)

Fig. 2 zeigt ein weiteres Heizelement 34 für einen erfindungsgemäßen Flüssigkeitsbehälter. Das Heizelement 34 ist über Kabel 36, 38 mit einem Stecker 40 verbunden. Das Heizelement 34 hat Aussparungen 42, die innerhalb eines Vorratsvolumens Raum für Funktionseinheiten oder in das Vorratsvolumen auskragende Strukturen, wie Schwallwände , freilassen.

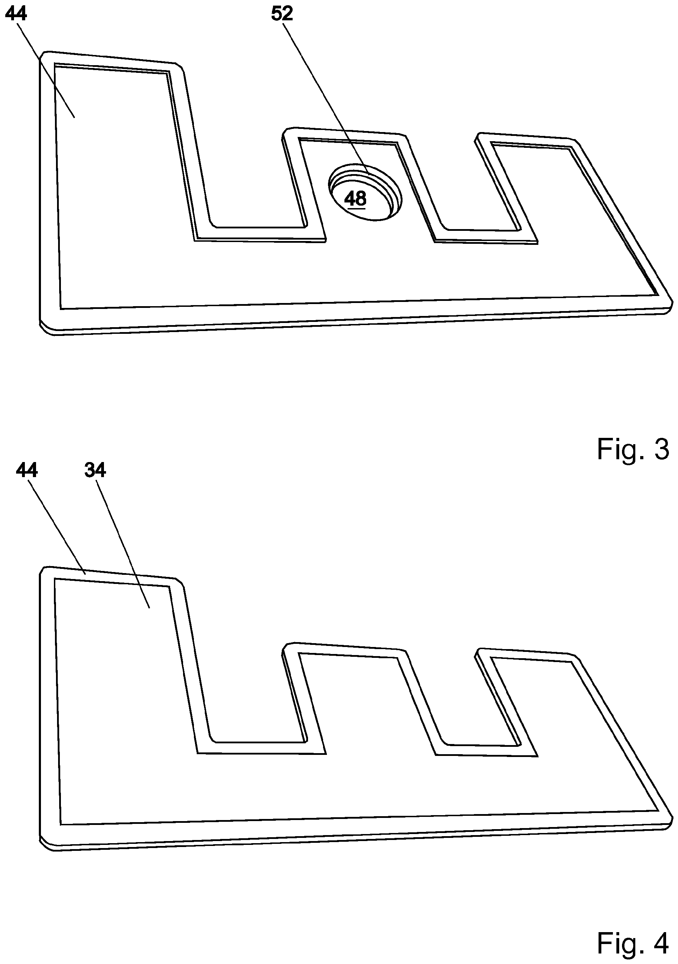

Fig. 3 zeigt eine Unterschale 44 eines Gehäuses 46, die zur Aufnahme des Heizelements 34 samt Kabel 36, 38 und Stecker 40 eingerichtet ist. Die Unterschale 44 hat eine erste Durchgangsöffnung 48 zum Durchführen des Steckers 40 und der Kabel 36, 38. Ein zwischen dem Stecker 40 und dem Heizelement 34 gebildetes Formelement 50 (Fig. 2) ist dazu eingerichtet, in einem umlaufenden Kragen 52 der Durchgangsöffnung 48 aufgenommen und flüssigkeitsdicht mit dem Kragen 52 verbunden zu werden.

Fig. 4 zeigt das in der Unterschale 44 aufgenommene Heizelement 34. Es versteht sich, dass die Unterschale 44 unabhängig und separat von dem Heizelement 34 bereitgestellt werden kann oder aber durch Umspritzen des Heizelements 34 gebildet werden kann.

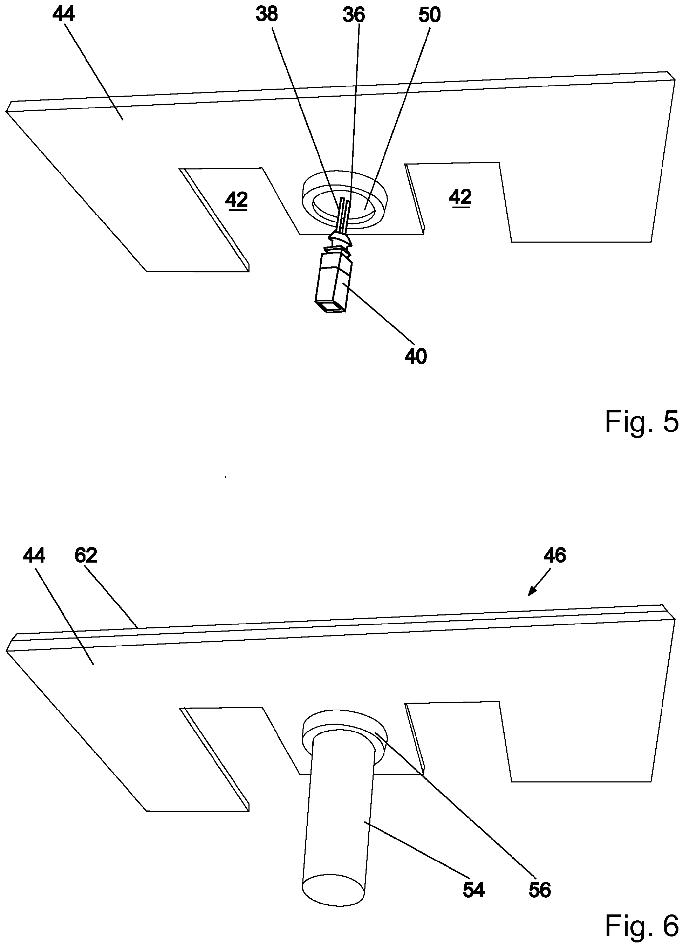

Fig. 5 zeigt die Unterschale 44 mit dem Heizelement 34 in einer perspektivischen Ansicht von unten.

Fig. 6 zeigt das nunmehr vollständig in dem Gehäuse 46 aufgenommene Heizelement 34, wobei die Unterschale 44 nunmehr einer Oberschale 52 ergänzt worden ist, sodass das Heizelement 34 vollständig von dem Gehäuse 46 eingefasst wird. Der Stecker 40 und die Kabel 36, 38 sind vorliegend von einer Hülse 54 umschlossen, um den Stecker 40 und die Kabel 36, 38 bei der Montage bzw. dem Verschweißen mit einer Halbschale eines Flüssigkeitsbehälters vor einer Beschädigung zu schützen. Die Hülse 54 kann als Transportschutz bis zur endgültigen Montage in einem Kraftfahrzeug an dem Gehäuse 46 verbleiben.

Gemäß alternativer Ausführungen der Erfindung kann die Hülse 54 als Bestandteil des Gehäuses 46 am Gehäuse 46 verbleiben und mit einem dem Heizelement abgewandten Hülsenende mit einer Unterschale 6 (vgl. Fig. 1) flüssigkeitsdicht verschweißt werden.

Das Gehäuse 46 kann mithilfe des umlaufenden Kragens 56 mit einem Profil einer zweiten Durchgangsöffnung einer Halbschale eines Flüssigkeitsbehälters verschweißt werden, wie exemplarisch in Fig. 1 dargestellt.

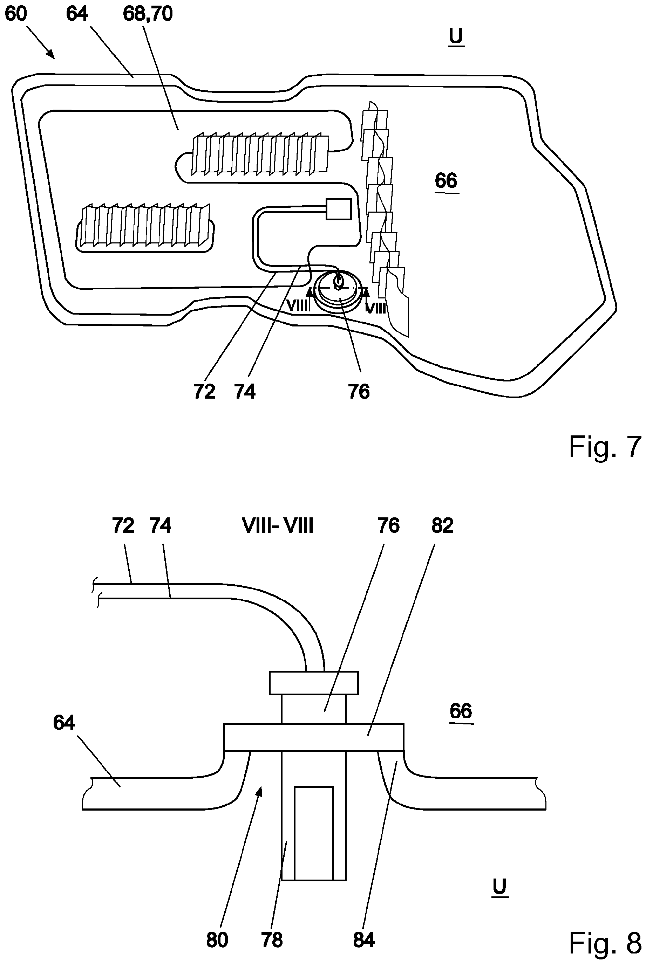

Fig. 7 zeigt eine untere Halbschale 60 eines weiteren erfindungsgemäßen Flüssigkeitsbehälters, mit einer Behälterwandung 64, die ein Vorratsvolumen 66 zum Bevorraten von Flüssigkeit gegenüber einer Umgebung U begrenzt, einem Heizelement 68, das in dem Vorratsvolumen 66 angeordnet ist und mit einem Gehäuse 70, wobei das Gehäuse 70 das Heizelement 68 gegenüber dem Vorratsvolumen 66 flüssigkeitsdicht einfasst.

Zur Energieversorgung des Heizelements 68 sind Kabel 72, 74 ausgehend von dem Heizelement 68 zu einem Stecker 76 geführt. Der Stecker hat einen Anschlussbereich 78 der außerhalb des Vorratsvolumens 66 angeordnet und einer Umgebung U des Flüssigkeitsbehälters zugewandt ist. Der Stecker 76 ist im Bereich einer Durchgangsöffnung 80 der Behälterwandung 64 flüssigkeitsdicht mit der Behälterwandung 64 verbunden. Der Stecker 76 verschließt die Durchgangsöffnung 80 nach Art eines Stopfens.

Fig. 8 zeigt einen Querschnitt, mit der Durchgangsöffnung 80, dem Stecker 76, den Kabeln 72, 74, und einen Ausschnitt der Wandung 64. Der Stecker 76 hat einen innerhalb des Vorratsvolumens 66 angeordneten, umlaufenden Kragen 82, der mit einem dem Vorratsvolumen zugewandten Kragen 84 der Behälterwandung flüssigkeitsdicht verschweißt ist. Der Stecker 76 sitzt demnach vorliegend in der Durchgangsöffnung 80 der Behälterwandung 64.

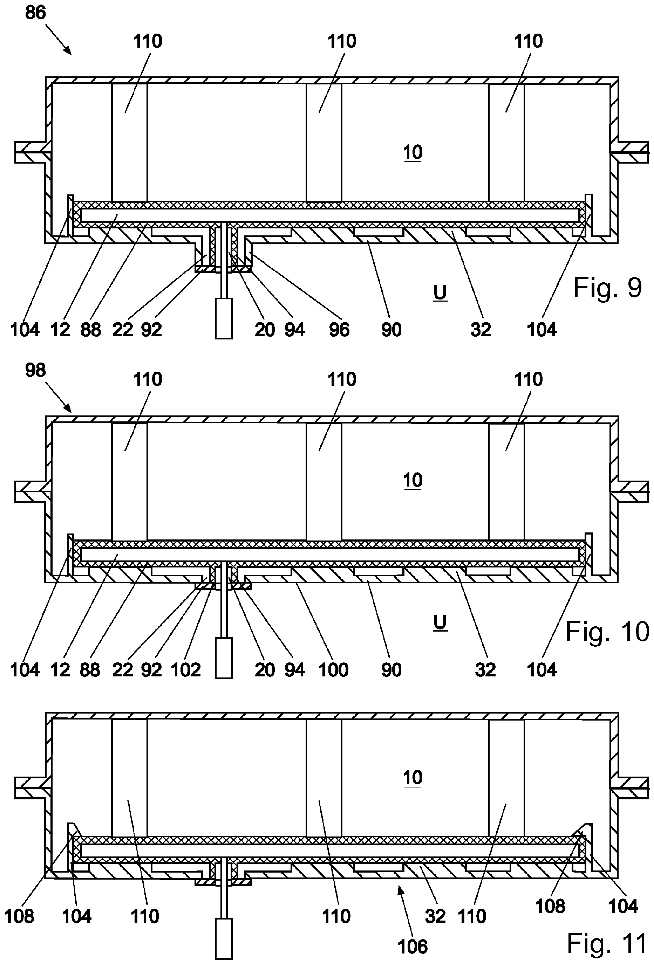

Fig. 9 zeigt einen weiteren Flüssigkeitsbehälter 86 für ein Kraftfahrzeug in einem Querschnitt. Der Flüssigkeitsbehälter 86 unterscheidet sich dadurch von den voranstehend beschriebenen Ausführungsbeispielen, dass ein Gehäuse 88 und eine Behälterwandung 90 mittels eines Schweißrings 92 miteinander verschweißt sind.

Das Gehäuse 88 hat einen Gehäusekragen 94, der die erste Durchgangsöffnung 20 begrenzt, der von dem Heizelement 12 abgewandt in Richtung der Umgebung U erstreckt ist und der zumindest abschnittsweise innerhalb der zweiten Durchgangsöffnung 22 erstreckt ist, wobei der Gehäusekragen 94 mittels des Schweißrings 92 mit der Behälterwandung 90 verschweißt ist.

Die Behälterwandung 90 hat einen Wandungskragen 96, der die zweite Durchgangsöffnung 22 begrenzt und der von dem Heizelement 12 abgewandt in Richtung der Umgebung U erstreckt ist, wobei der Wandungskragen 96 mittels des Schweißrings 92 mit dem Gehäuse 90, vorliegend dem Gehäusekragen 94, verschweißt ist.

Fig. 10 zeigt einen weiteren Flüssigkeitsbehälter 98 für ein Kraftfahrzeug in einem Querschnitt. Der Flüssigkeitsbehälter 98 unterscheidet sich dadurch von dem in Fig. 9 gezeigten Ausführungsbeispiel, dass die Behälterwandung 90 keinen Wandungskragen hat. Vorliegend verbindet der Schweißring 92 unmittelbar eine dem Vorratsvolumen abgewandte Außenseite 100 der Behälterwandung 90 mit einer auf Höhe der Außenseite 100 angeordneten Stirnseite 102 des Gehäusekragens 94.

Die Flüssigkeitsbehälter 86, 98 haben Rippen 104, die an der Behälterwandung 90 vorgesehen sind, die einen seitlichen Anschlag zur Positionierung des Gehäuses 88 innerhalb des Vorratsvolumens 10 bilden. Die Rippen 104 legen die horizontale Position des Gehäuses 88 relativ zur Behälterwandung 90 fest.

Die Rippen 104 sind einander abgewandter Seiten des Gehäuses 88 zugeordnet und fassen das Gehäuse 88 zweiseitig ein, wobei die Rippen 104 an den einander abgewandten Seiten des Gehäuses 88 anliegen. Es versteht sich, dass die Behälterwandung 90 weitere Rippen 104 aufweisen kann, die das Gehäuse 88 in einer Richtung senkrecht zum vorliegenden Querschnitt betrachtet gegenüber der Behälterwandung 90 horizontal festlegen.

Ein in Fig. 11 gezeigter Flüssigkeitsbehälter 106 hat an den Rippen 104 gebildete Rastvorsprünge 108, die eine Schnapp- bzw. Clipverbindung ermöglichen, und das Gehäuse 88 nach Art von Widerhaken umgreifen. So kann ein Abheben des Gehäuses 88 von der Behälterwandung 90 vermieden werden.

Weiter wird ein Abheben des Gehäuses 88 von der Behälterwandung 90 dadurch vermieden, dass Niederhalter 110 an der Behälterwandung 90 vorgesehen sind, die jeweils einen Anschlag zur Positionierung des Gehäuses 88 innerhalb des Vorratsvolumens 10 bilden.

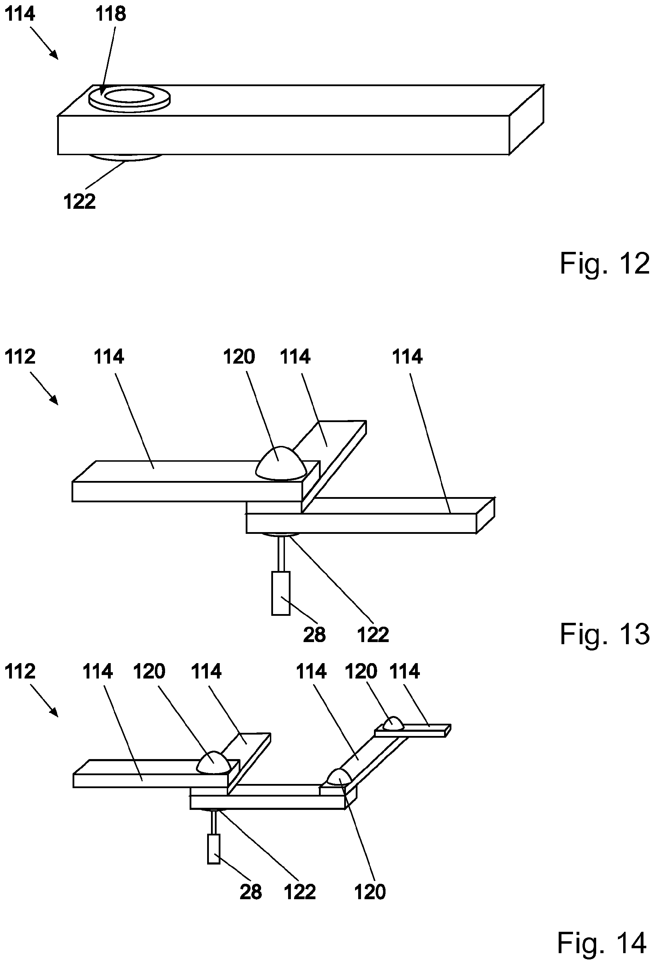

Alternativ zu den voranstehend beschriebenen flächigen Plattenheizelementen kann ein Flüssigkeitsbehälter ein Heizelement 112 aufweisen, dass zwei oder mehr stabförmige Segmente 114 hat, die unter einem Winkelversatz fächerartig angeordnet sind und/oder kettenartig aneinandergereiht sind (Fig. 12, Fig. 13, Fig. 14).

Die Segmente 114 haben einen oder zwei Verbindungs- bzw. Kopplungsbereiche 118, die zur elektromechanischen Verbindung untereinander und ggf. zum Anschluss einen Steckers 28 dienen. Der Kopplungsbereich 118 kann mit einer Verschlusskappe 120 verdeckt werden, um den Kopplungsbereich vor Flüssigkeitskontakt zu schützen. Die stabförmigen Segmente 114 haben demnach form- und/oder kraftschlüssig wirkende elektromechanische Verbindungsmittel 121, wie eine Rastverbindung, eine Schnappverbindung oder eine Druckknopfverbindung , um die stabförmigen Segmente 114 miteinander zu verbinden und elektrisch zu kontaktieren. Weiter können die Segmente 114 einen Schweißkragen 122 haben, um miteinander oder einer Behälterwandung verschweißt zu werden.

### Bezugszeichen

- 2: Flüssigkeitsbehälter
- 4: Oberschale
- 6: Unterschale
- 10: Vorratsvolumen
- 12: Heizelement
- 14: Gehäuse
- 16: Kabeldurchführung
- 18: Kabel
- 20: erste Durchgangsöffnung
- 22: zweite Durchgangsöffnung
- 24: Profil
- 26: Schweißverbindung
- 28: Stecker
- 30: Boden
- 32: Stützelementen
- 34: Heizelement
- 36: Kabel
- 38: Kabel
- 40: Stecker
- 42: Aussparungen
- 44: Unterschale
- 46: Gehäuses
- 48: erste Durchgangsöffnung
- 50: Formelement
- 52: umlaufender Kragen
- 54: Hülse
- 56: umlaufenden Kragen
- 60: untere Halbschale
- 62: Oberschale
- 64: Behälterwandung
- 66: Vorratsvolumen
- 68: Heizelement
- 70: Gehäuse
- 72: Kabel
- 74: Kabel
- 76: Stecker
- 78: Anschlussbereich
- 80: Durchgangsöffnung
- 82: Kragen
- 84: Kragen
- 86: Flüssigkeitsbehälter
- 88: Gehäuse
- 90: Behälterwandung
- 92: Schweißrings
- 94: Gehäusekragen
- 96: Wandungskragen
- 98: Flüssigkeitsbehälter
- 100: Außenseite
- 102: Stirnseite
- 104: Rippen
- 106: Flüssigkeitsbehälter
- 108: Rastvorsprünge
- 110: Niederhalter
- 112: Heizelement
- 114: Segmente
- 118: Verbindungs- / Kopplungsbereich
- 120: Verschlusskappe
- 121: elektromechanische Verbindungsmittel
- 122: Schweißkragen
- a: Abstand
- b: Wanddicke
- c: Wanddicke
- U: Umgebung

## Patentansprüche

1. Flüssigkeitsbehälter für ein Kraftfahrzeug,
- mit einer Behälterwandung (8, 64, 90), die ein Vorratsvolumen (10, 66) zum Bevorraten von Flüssigkeit gegenüber einer Umgebung (U) begrenzt,
- mit einem Heizelement (12, 34, 68), das in dem Vorratsvolumen (10, 66) angeordnet (8, 64) ist und
- mit einem Gehäuse (14, 46, 70, 88), wobei das Gehäuse (14, 46, 70, 88) das Heizelement (12, 34, 68) gegenüber dem Vorratsvolumen (10, 66) flüssigkeitsdicht einfasst
- eine Kabeldurchführung (16), wobei wenigstens ein Kabel (18, 36, 38) zur Energieversorgung des Heizelements (12, 34, 68) ausgehend von dem Heizelement (12, 34, 68) in die Umgebung (U) des Flüssigkeitsbehälters (2, 86, 98, 106) geführt ist,
- wobei die Kabeldurchführung (16) eine erste Durchgangsöffnung (20, 48) hat, die an dem Gehäuse (14, 46, 70, 88) gebildet ist, und eine zweite Durchgangsöffnung (22) hat, die an der Behälterwandung (8, 64, 90) gebildet ist, und
- wobei das Gehäuse (14, 46, 70, 88) und die Behälterwandung (8, 64, 90) im Bereich der Kabeldurchführung (16) flüssigkeitsdicht verbunden sind,
- das Gehäuse (88) und die Behälterwandung (90) mittels eines Schweißrings (92) miteinander verschweißt sind, **dadurch gekennzeichnet, dass**
- die Behälterwandung (90) einen Wandungskragen (96) hat,
- der die zweite Durchgangsöffnung (22) begrenzt und
- der von dem Heizelement (12) abgewandt in Richtung der Umgebung (U) erstreckt ist,
- wobei der Wandungskragen (96) mittels des Schweißrings (92) mit dem Gehäuse (88) verschweißt ist,
- das Gehäuse (88) einen Gehäusekragen (94) hat,
- der die erste Durchgangsöffnung (20) begrenzt,
- der von dem Heizelement (12) abgewandt in Richtung der Umgebung (U) erstreckt ist und
- der zumindest abschnittsweise innerhalb der zweiten Durchgangsöffnung (24) erstreckt ist, wobei der Gehäusekragen (94) mittels des Schweißrings (92) mit der Behälterwandung (90) verschweißt ist.

2. Flüssigkeitsbehälter nach Anspruch 1,
**dadurch gekennzeichnet, dass**
- ein in Richtung des Heizelements (12) erstrecktes Profil (24) an die Behälterwandung (8) angeformt ist,
- wobei das Profil (24) die zweite Durchgangsöffnung (22) begrenzt und
- wobei das Profil (24) endseitig mit dem Gehäuse (14, 46) flüssigkeitsdicht verschweißt ist oder flüssigkeitsdicht verrastet ist.

3. Flüssigkeitsbehälter nach einem der Ansprüche 1 oder 2,
**dadurch gekennzeichnet, dass**
- das Gehäuse (14, 46, 70, 88) im Bereich der ersten Durchgangsöffnung (20) gegenüber der Umgebung (U) abgedichtet ist.

4. Flüssigkeitsbehälter nach einem der Ansprüche 1 bis 3,
**dadurch gekennzeichnet, dass**
- ein an einem Kabelende des Kabels (18, 36, 38) vorgesehener Stecker (28, 40) durch die zweite Durchgangsöffnung (22) durchführbar ist.

5. Flüssigkeitsbehälter nach Anspruch 1,
**dadurch gekennzeichnet, dass**
- wenigstens ein Kabel (72, 74) zur Energieversorgung des Heizelements (68) ausgehend von dem Heizelement (68) zu einem Stecker (76) geführt ist,
- wobei der Stecker (76) einen Anschlussbereich (78) hat, der außerhalb des Vorratsvolumens (66) angeordnet und einer Umgebung (U) des Flüssigkeitsbehälters zugewandt ist, und
- wobei der Stecker (76) im Bereich einer Durchgangsöffnung (80) der Behälterwandung (64) flüssigkeitsdicht mit der Behälterwandung (64) verbunden ist und die Durchgangsöffnung (80) nach Art eines Stopfens verschließt.

6. Flüssigkeitsbehälter nach Anspruch 5,
**dadurch gekennzeichnet, dass**
- wobei der Stecker (76) einen innerhalb des Vorratsvolumens (66) angeordneten umlaufenden Kragen (82) hat, der mit einem dem Vorratsvolumen (66) zugewandten Kragen (84) der Behälterwandung (64) stoffschlüssig und flüssigkeitsdicht verbunden ist,
und/oder
- wobei der Stecker (76) zumindest abschnittweise in der Durchgangsöffnung (80) der Behälterwandung (64) sitzt.

7. Flüssigkeitsbehälter nach einem der Ansprüche 1 bis 6,
**dadurch gekennzeichnet, dass**
- eine Mehrzahl von Stützelementen (32), wie Stege oder Streben, ausgehend von der Behälterwandung (8, 90) in Richtung des Heizelements (12) erstreckt sind,
- wobei das Gehäuse (14, 46, 70, 88) derart auf den Stützelementen (32) aufliegt und/oder mit den Stützelementen (32) verbunden ist, dass das Heizelement (12) einen Abstand (a) zu der Wandung (8) aufweist.

8. Flüssigkeitsbehälter nach einem der Ansprüche 1 bis 7,
**dadurch gekennzeichnet, dass**
- eine dem Vorratsvolumen (10, 66) abgewandte Hülse (54) als Transportschutz und/oder Montagehilfe für Kabel (18, 36, 38, 72, 74), Stecker (28, 40, 76) oder Kontakte, an dem Gehäuse (14, 46, 70, 88) befestigt ist
und/oder
- eine dem Vorratsvolumen (10, 66) abgewandte Hülse (54) als Teil des Gehäuses (14, 46, 70) flüssigkeitsdicht mit der Behälterwandung (8, 64) verbunden ist, insbesondere, dass eine dem Heizelement (12, 34, 68) abgewandter Endabschnitt der Hülse (54) mit der Behälterwandung (8, 64) flüssigkeitsdicht verschweißt und/oder verklebt ist.

9. Flüssigkeitsbehälter nach einem der Ansprüche 1 bis 8,
**dadurch gekennzeichnet, dass**
- wenigstens eine Rippe (104) an der Behälterwandung (90) vorgesehen ist, die einen Anschlag zur Positionierung des Gehäuses (88) innerhalb des Vorratsvolumens (10) bildet.

10. Flüssigkeitsbehälter nach Anspruch 9,
**dadurch gekennzeichnet, dass**
- zwei oder mehr Rippen (104) einander abgewandter Seiten des Gehäuses (88) zugeordnet sind und das Gehäuse (88) wenigstens zweiseitig einfassen, wobei die Rippen (104) insbesondere an den einander abgewandten Seiten des Gehäuses (88) anliegen.

11. Flüssigkeitsbehälter nach einem der Ansprüche 1 bis 10,
**dadurch gekennzeichnet, dass**
- wenigstens ein Niederhalter (110) an der Behälterwandung (90) vorgesehen ist, der einen Anschlag zur Positionierung des Gehäuses (88) innerhalb des Vorratsvolumens (10) bildet.

12. Flüssigkeitsbehälter nach einem der Ansprüche 1 bis 11,
**dadurch gekennzeichnet, dass**
- das Heizelement (112) zwei oder mehr stabförmige Segmente (114) hat, die unter einem Winkelversatz fächerartig angeordnet sind oder kettenartig aneinandergereiht sind.

13. Flüssigkeitsbehälter nach Anspruch 12,
**dadurch gekennzeichnet, dass**
- die stabförmigen Segmente (114) form- und/oder kraftschlüssig wirkende elektromechanische Verbindungsmittel (120) aufweisen, wie eine Rastverbindung, eine Schnappverbindung oder eine Druckknopfverbindung, um die stabförmigen Segmente (114) miteinander zu verbinden und elektrisch zu kontaktieren.

## Claims

1. A liquid container for a motor vehicle,
- having a container wall (8, 64, 90), which delimits with respect to surroundings (U) a storage volume (10, 66) for storing liquid,
- having a heating element (12, 34, 68), which is arranged in the storage volume (10, 66), and
- having a housing (14, 46, 70, 88), wherein the housing (14, 46, 70, 88) encloses the heating element (12, 34, 68) in a liquid-tight manner with respect to the storage volume (10, 66) .
- a cable leadthrough (16), wherein at least one cable (18, 36, 38) for the supply of energy to the heating element (12, 34, 68) is led from the heating element (12, 34, 68) into the surroundings (U) of the liquid container (2, 86, 98, 106),
- wherein the cable leadthrough (16) has a first passage opening (20, 48), which is formed on the housing (14, 46, 70, 88), and has a second passage opening (22), which is formed on the container wall (8, 64, 90), and
- wherein, in the region of the cable leadthrough (16), the housing (14, 46, 70, 88) and the container wall (8, 64, 90) are connected in a liquid-tight manner,
- the housing (88) and the container wall (90) are welded to one another by means of a welding ring (92,
**characterized in that**
- the container wall (90) has a wall collar (96),
- which delimits the second passage opening (22) and
- extends in the direction of the surroundings (U) in a manner facing away from the heating element (12),
- wherein the wall collar (96) is welded to the housing (88) by means of the welding ring (92),
- the housing (88) has a housing collar (94),
- which delimits the first passage opening (20) and
- extends in the direction of the surroundings (U) in a manner facing away from the heating element (12) and,
- at least sectionally, extends within the second passage opening (24), wherein the housing collar (94) is welded to the container wall (90) by means of the welding ring (92).

2. The liquid container as claimed in claim 1,
**characterized in that**
- a profile (24) extending in the direction of the heating element (12) is integrally formed on the container wall (8),
- wherein the profile (24) delimits the second passage opening (22), and
- wherein the profile (24), at an end side, is welded in a liquid-tight manner, or is locked with detent action in a liquid-tight manner, to the housing (14, 46).

3. The liquid container as claimed in either of claims 1 and 2,
**characterized in that**,
- in the region of the first passage opening (20), the housing (14, 46, 70, 88) is sealed off with respect to the surroundings (U).

4. The liquid container as claimed in one of claims 1 to 3, **characterized in that**
- a plug-in connector (28, 40) provided at one cable end of the cable (18, 36, 38) is able to be led through the second passage opening (22).

5. The liquid container as claimed in claim 1,
**characterized in that**
- at least one cable (72, 74) for the supply of energy to the heating element (68) is led from the heating element (68) to a plug-in connector (76),
- wherein the plug-in connector (76) has a connection region (78) which is arranged outside the storage volume (66) and which faces surroundings (U) of the liquid container, and
- wherein the plug-in connector (76) is, in the region of a passage opening (80) of the container wall (64), connected in a liquid-tight manner to the container wall (64) and closes off the passage opening (80) in the manner of a plug.

6. The liquid container as claimed in claim 5,
- wherein the plug-in connector (76) has a peripheral collar (82), which is arranged within the storage volume (66) and is connected in a materially bonded and liquid-tight manner to a collar (84), facing the storage volume (66), of the container wall (64),
and/or
- wherein the plug-in connector (76) is, at least sectionally, seated in the passage opening (80) of the container wall (64).

7. The liquid container as claimed in one of claims 1 to 6, **characterized in that**
- a plurality of support elements (32), such as webs, struts or the like, extend from the container wall (8, 90) in the direction of the heating element (12),
- wherein the housing (14, 46, 70, 88) bears on the support elements (32), and/or is connected to the support elements (32), such that the heating element (12) is at a distance (a) from the wall (8).

8. The liquid container as claimed in one of claims 1 to 7, **characterized in that**
- a sleeve (54) which faces away from the storage volume (10, 66) is, as transport protection and/or an assembly aid for cables (18, 36, 38, 72, 74), plug-in connectors (28, 40, 76) or contacts, fastened to the housing (14, 46, 70, 88), and/or
- a sleeve (54) which faces away from the storage volume (10, 66) is, as part of the housing (14, 46, 70), connected in a liquid-tight manner to the container wall (8, 64), in particular that an end section, facing away from the heating element (12, 34, 68), of the sleeve (54) is welded, and/or adhesively bonded, in a liquid-tight manner to the container wall (8, 64) .

9. The liquid container as claimed in one of claims 1 to 8, **characterized in that**
- provision is made on the container wall (90) of at least one rib (104), which forms a stop for the positioning of the housing (88) within the storage volume (10).

10. The liquid container as claimed in claim 9, **characterized in that**
- two or more ribs (104) are assigned to sides of the housing (88) that face away from one another, and border the housing (88) at least on two sides, wherein the ribs (104) bear in particular against the sides of the housing (88) that face away from one another.

11. The liquid container as claimed in one of claims 1 to 10,
**characterized in that**
- provision is made on the container wall (90) of at least one holding-down means (110), which forms a stop for the positioning of the housing (88) within the storage volume (10) .

12. The liquid container as claimed in one of claims 1 to 11,
**characterized in that**
- the heating element (112) has two or more bar-like segments (114) which are arranged with an angular offset in a fan-like manner and/or are arranged in a row in a chain-like manner.

13. The liquid container as claimed in claim 12, **characterized in that**
- the bar-like elements (114) have electromechanical connection means which act in a form- and/or force-fitting manner, such as a detent connection, a snap-action connection or a press-stud connection, in order for the bar-like segments (114) to be connected to one another and electrically contacted with one another.

## Revendications

1. Réservoir à liquide pour véhicule automobile,
- comportant une paroi de réservoir (8, 64, 90) qui délimite un volume de stockage (10, 66) permettant de stocker du liquide par rapport à un environnement (U),
- comportant un élément de chauffage (12, 34, 68) qui est disposé (8, 64) dans le volume de stockage (10, 66) et
- comportant un boîtier (14, 46, 70, 88), le boîtier (14, 46, 70, 88) renfermant l'élément de chauffage (12, 34, 68) de manière étanche aux liquides par rapport au volume de stockage (10, 66)
- comportant une traversée de câble (16), au moins un câble (18, 36, 38) permettant de fournir de l'énergie à l'élément de chauffage (12, 34, 68) étant guidé de l'élément de chauffage (12, 34, 68) jusque dans l'environnement (U) du réservoir à liquide (2, 86, 98, 106),
- la traversée de câble (16) présentant une première ouverture traversante (20, 48) qui est formée sur le boîtier (14, 46, 70, 88), et une seconde ouverture traversante (22) qui est formée sur la paroi de réservoir (8, 64, 90), et
- le boîtier (14, 46, 70, 88) et la paroi de réservoir (8, 64, 90) étant reliés de manière étanche aux liquides dans la zone de la traversée de câble (16),
- le boîtier (88) et la paroi de réservoir (90) étant soudés l'un à l'autre au moyen d'une bague de soudage (92),
**caractérisé en ce que**
- la paroi de réservoir (90) présente une collerette de paroi (96),
- qui délimite la seconde ouverture traversante (22) et
- qui s'étend en s'éloignant de l'élément de chauffage (12) en direction de l'environnement (U),
- la collerette de paroi (96) étant soudée au boîtier (88) au moyen de la bague de soudage (92),
- le boîtier (88) présente une collerette de boîtier (94),
- qui délimite la première ouverture traversante (20),
- qui s'étend en s'éloignant de l'élément de chauffage (12) en direction de l'environnement (U) et
- qui s'étend, au moins dans certaines régions, à l'intérieur de la seconde ouverture traversante (24), la collerette de boîtier (94) étant soudée à la paroi de réservoir (90) au moyen de la bague de soudage (92).

2. Réservoir à liquide selon la revendication 1,
**caractérisé en ce**
- **qu'**un profilé (24) s'étendant en direction de l'élément de chauffage (12) est surmoulé sur la paroi de réservoir (8),
- le profilé (24) délimitant la seconde ouverture traversante (22) et
- le profilé (24) étant soudé ou étant encliqueté au boîtier (14, 46) au niveau de son extrémité de manière étanche aux liquides.

3. Réservoir à liquide selon l'une des revendications 1 ou 2,
**caractérisé en ce**
- **que** le boîtier (14, 46, 70, 88) est rendu étanche par rapport à l'environnement (U) dans la zone de la première ouverture traversante (20).

4. Réservoir à liquide selon l'une des revendications 1 à 3,
**caractérisé en ce**
- **qu'**une fiche (28, 40) prévue à une extrémité de câble du câble (18, 36, 38) peut être passée à travers la seconde ouverture traversante (22).

5. Réservoir à liquide selon la revendication 1,
**caractérisé en ce**
- **qu'**au moins un câble (72, 74) permettant de fournir de l'énergie à l'élément de chauffage (68) est guidé de l'élément de chauffage (68) à une fiche (76),
- la fiche (76) présentant une zone de connexion (78) qui est disposée à l'extérieur du volume de stockage (66) et qui fait face à un environnement (U) du réservoir à liquide, et
- la fiche (76) étant reliée à la paroi de réservoir (64) de manière étanche aux liquides dans la zone d'une ouverture traversante (80) de la paroi de réservoir (64) et fermant l'ouverture traversante (80) à la manière d'un bouchon.

6. Réservoir à liquide selon la revendication 5,
**caractérisé en ce**
- **que** la fiche (76) présente une collerette circonférentielle (82) disposée à l'intérieur du volume de stockage (66) et reliée par liaison de matière et de manière étanche aux liquides à une collerette (84) de la paroi de réservoir (64) faisant face au volume de stockage (66), et/ou
- **que** la fiche (76) repose, au moins dans certaines régions, dans l'ouverture traversante (80) de la paroi de réservoir (64).

7. Réservoir à liquide selon l'une des revendications 1 à 6,
**caractérisé en ce**
- **qu'**une pluralité d'éléments de support (32), tels que des entretoises ou des montants, s'étendent depuis la paroi de réservoir (8, 90) en direction de l'élément de chauffage (12),
- le boîtier (14, 46, 70, 88) reposant sur les éléments de support (32) et/ou étant relié aux éléments de support (32) de telle sorte que l'élément de chauffage (12) comprend une distance (a) par rapport à la paroi (8).

8. Réservoir à liquide selon l'une des revendications 1 à 7,
**caractérisé en ce**
- **qu'**un manchon (54) opposé au volume de stockage (10, 66) est fixé en tant que protection de transport et/ou aide au montage de câbles (18, 36, 38, 72, 74), de fiches (28, 40, 76) ou de contacts sur le boîtier (14, 46, 70, 88) et/ou
- **qu'**un manchon (54) opposé au volume de stockage (10, 66) est relié de manière étanche aux liquides à la paroi de réservoir (8, 64) en tant que partie du boîtier (14, 46, 70), en particulier en ce qu'une section d'extrémité du manchon (54) opposée à l'élément de chauffage (12, 34, 68) est soudée et/ou collée à la paroi de réservoir (8, 64) de manière étanche aux liquides.

9. Réservoir à liquide selon l'une des revendications 1 à 8,
**caractérisé en ce**
- **qu'**au moins une nervure (104) est prévue sur la paroi de réservoir (90), laquelle forme une butée permettant de positionner le boîtier (88) à l'intérieur du volume de stockage (10).

10. Réservoir à liquide selon la revendication 9,
**caractérisé en ce**
- **qu'**au moins deux nervures (104) sont affectées à des côtés opposés l'un à l'autre du boîtier (88) et renferment le boîtier (88) au moins sur deux côtés, les nervures (104) reposant en particulier sur les côtés opposés l'un à l'autre du boîtier (88).

11. Réservoir à liquide selon l'une des revendications 1 à 10,
**caractérisé en ce**
- **qu'**au moins un dispositif de maintien (110) est prévu sur la paroi de réservoir (90), lequel forme une butée permettant de positionner le boîtier (88) à l'intérieur du volume de stockage (10).

12. Réservoir à liquide selon l'une des revendications 1 à 11,
**caractérisé en ce**
- **que** l'élément de chauffage (112) présente au moins deux segments en forme de tige (114) qui sont disposés en éventail avec un décalage angulaire ou sont juxtaposés les uns avec les autres comme une chaîne.

13. Réservoir à liquide selon la revendication 12,
**caractérisé en ce**
- **que** les segments en forme de tige (114) comprennent des moyens de liaison électromécaniques (120) qui agissent par complémentarité de forme et/ou à force, tels qu'une liaison à encliquetage, une liaison à enclenchement ou une liaison à bouton-poussoir, afin de relier les segments en forme de tige (114) les uns aux autres et d'établir un contact électrique.
